Europäisches Patentamt

European Patent Office

Office européen des brevets

(11) Publication number: **0 042 125**
**A1**

# EUROPEAN PATENT APPLICATION

(21) Application number: **81104384.3**

(22) Date of filing: **06.06.81**

(51) Int. Cl.³: **G 03 B 21/64**

(30) Priority: **16.06.80 US 159956**

(43) Date of publication of application: **23.12.81**
**Bulletin 81/51**

(84) Designated Contracting States: **DE FR GB NL**

(71) Applicant: **GENERAL ELECTRIC COMPANY, 1 River Road, Schenectady New York 12305 (US)**

(72) Inventor: **Banks, Seth Richard, 5143 N. Berkeley Boulevard, Milwaukee Wisconsin (US)**
Inventor: **Sivertsen, Marvin Leander, 7830 W. Holmes Avenue, Milwaukee Wisconsin (US)**
Inventor: **Sobolewski, Valentine Steven, W166 S6787 Oak Hill Drive, Muskego Wisconsin (US)**

(74) Representative: **Schüler, Horst, Dr. et al, Kaiserstrasse 41, D-6000 Frankfurt/Main 1 (DE)**

(54) **Peel-off mount for X-ray film strips.**

(57)    A film mount having a plurality of apertures with each aperture having a tab means which is selectively removable to accommodate the number of desired film frames to be mounted. The apertures which are not used thus remain blocked to prevent the exposure of the illuminator to the eyes of the viewer. Face and backing sheets are adhesively attached and the tab portions of the backing sheet, when removed in combination with the corresponding face sheet tabs, expose an adhesive surface to firmly and lastingly receive and retain a film strip for storage but also allow its selective removal and replacement, if desired.

10077-15XZ-1962

- 1 -

## PEEL-OFF MOUNT FOR X-RAY FILM STRIPS

This invention relates generally to film-mount structures and, more particularly, to mounting structures for the convenient viewing, handling, and storing of exposed x-ray film strips.

One of the procedures commonly performed in an x-ray room, often in conjunction with fluoroscopic examinations, is the obtaining of representative x-rays of parts of the anatomy by way of a camera, such as a 105 mm camera. Exposure of the film within the cassette is accomplished by an x-ray beam which is projected through the patient from an x-ray source in the table. The cassette for such an apparatus contains a roll of film which is advanced and exposed, frame by frame, in much the same manner as in a conventional camera. The development of the film is then accomplished by first removing the film from the camera and then developing the film for viewing. In order to accommodate the viewing, it is common to mount a number of frames in each of a number of film strips within a single mounting device, which can in turn be mounted in front of a uniform light source, or viewer, in such a manner that all of the frames are conveniently displayed at the same time. Such a mounting must be of a very practical and functional nature in order to allow for ease in handling, viewing, and storing. Thus, it is desirable that a mounting structure be light in weight, and present a minimum of frame structure to permit a maximum area of the film to be illuminated to the viewer. Another requirement is that the finished mounting be sufficiently durable to allow for relatively rough handling, such as the throwing up against a viewer, and the placing into and retrieving from the files. The need for a durable film mount is made more important by a common requirement in hospitals that medical x-rays be retained for a period of seven to ten years.

Other desirable characteristics for a film mount include: the facilitation of easily and quickly loading film into the mount, a means of accurately placing the film in the proper position within the mount, the means to retrieve, reposition, and/or remount films without incurring damage to either the mount or the film, and the ability to use only a selected portion of a film mount frame. These requirements are generally met by the invention shown and described in U.S. Patent Application Serial No. 137,310 filed on April 4, 1980 and assigned to the assignee of the present application.

One of the problems which the prior art has not addressed is that of the effect on a viewer's eyes when a film mount frame is only partially filled to thereby expose the viewer to the illuminating light which passes through the unmounted frame apertures. That is, when a typical nine-aperture mounting frame has a single strip with three frames placed in the central portion thereof, for example, the light from the illuminator will pass through the other six apertures to thereby distract the viewer when the mount is placed on the illuminator panel. Further, this additional light will cause the iris of the viewer's eye to contract to an aperture smaller than that which is optimum for viewing the grays of the radiograph, thereby detracting from the viewer's ability to analyze the radiograph. In addition to affecting a viewer's instantaneous performance, this "bare light" will tend to have a discomforting and tiring affect on the viewer should the condition persist for any substantial period of time.

The problem is addressed by the present invention through provision for a radiographic film mount which allows the use of a portion of the mount apertures without causing detrimental affects to the viewer by the remaining unused apertures.

Yet another feature of the present invention is the provision for a radiographic film mount which does not expose the viewer to bare light when viewing film strips which are mounted in only a selected

- 4 -

portion of the available apertures in a particular film-mount frame.

In accordance with one aspect of the invention, a film-mount frame is provided with a plurality of tabs disposed therein. Provision is made to easily remove any one or more of these tabs to thereby introduce corresponding apertures in the mount. Each of these apertures is then adapted to receive a single radiographic film frame for subsequent illumination and viewing.

One way in which this is accomplished is to provide a film-mount structure comprising a backing sheet and an overlying face sheet. Both the face sheet and the backing sheet have a plurality of removable tabs disposed in a matrix arrangement corresponding to positions which can accommodate individual frames of film strips. For any single aperture position, or a plurality of positions, the cooperating backing sheet tab and face sheet tab are removed to expose an aperture for receiving the film strip. The backing sheet tab is larger than the corresponding face sheet tab such that when the combination is removed, there is an edge on the rear side of the face sheet which is adapted to engagingly receive the corresponding edge of the film strip. In this way, a film mount structure can be used to accommodate a single or a plurality of radiographic film frames or film strips while, for the unused portions, the tabs may be left in place to block out the lignt that would otherwise be exposed to the observers eye upon presentation to an illuminating apparatus.

By another aspect of the invention, either one or both cooperating face sheet and backing sheet tabs may be perforated at their borders. That is, in order to remove an individual tab, it may be necessary to tear the perforated portion in order to separate the tab from the surrounding frame material or from an adjacent tab. If the tabs are secured to the mount frame in another manner, it may not be necessary to provide a perforated interconnection but instead to have each of the face sheet and backing sheet tabs be individually separated or cut out from the surrounding frame structure.

In the preferred embodiment, the facing sheet, including its tabs, has an adhesive applied thereto for adhesively engaging the backing sheet with its corresponding tabs. The face sheet tabs are smaller than the corresponding backing sheet tabs, such that when the corresponding pair is removed by separating any perforated portion and by peeling the backing sheet tabs from the rear side of the face sheet, a border is left on the rear side of the facing sheet. This border, which still has the adhesive medium on its surface, is adapted to receive in adhesive engagement, the peripheral edges of a radiographic film frame for retention in a secure and lasting manner. The thickness of the backing sheets is substantially equal to that of the radiographic film such that when the film is placed in position over the apertures, the edges of the radiographic film and those of the remaining lattice structure of the backing sheet form a smooth interface which will tend not to be susceptible to snagging.

In the drawings as hereinafter described, the preferred embodiment is depicted; however, various other modifications and alternate constructions can be made thereto without departing from the true spirit and scope of the invention.

FIGURE 1 is a top-plan view of the film-mount structure in accordance with the preferred embodiment of the invention.

FIGURE 2 is a sectional view thereof as seen along lines 2-2 of FIG. 1.

- 7 -

FIGURE 3 is a bottom view of the frame-mount structure of the present invention.

FIGURE 4 is a sectional view thereof as seen along lines 4-4 of FIG. 3.

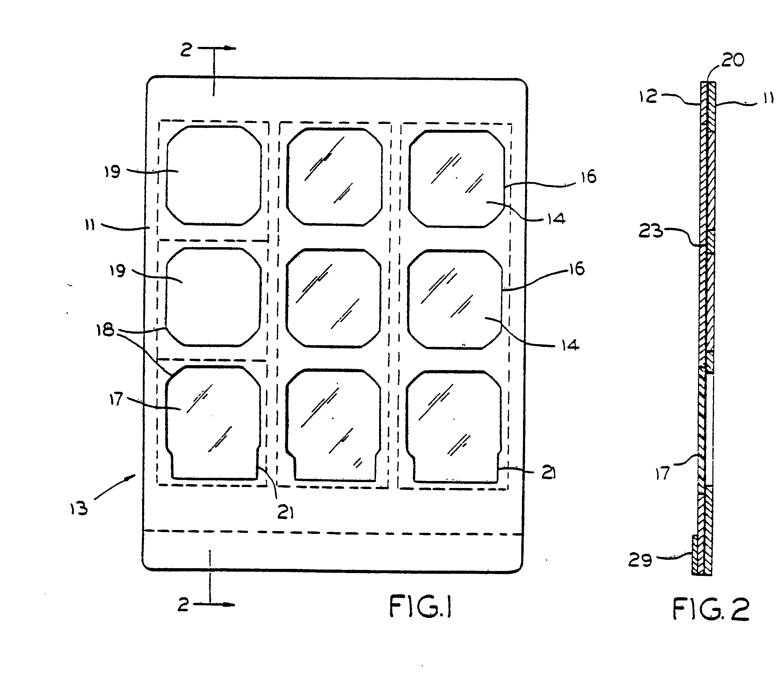

The present invention, as shown in Figures 1 through 4, comprises a face sheet 11 and a backing sheet 12, which are secured together by a properly selected adhesive 20 to form a mounting frame, indicated generally by the numeral 13, for receiving and retaining a plurality of radiographic film strips 14. It should be recognized that the present invention would apply to any size film and is particularly adapted for mounting a single frame, or film strip, or a plurality of frames or film strips. For purposes of illustration, the present invention will be described herein as a mount structure having a capacity for containing three film strips disposed in side-by-side parallel relationship with each film strip comprising three longitudinally-aligned frames 16, but having actually installed two full three-frame film strips 14 and a single frame strip shown generally by the reference number 17.

The face sheet 11 is fabricated of a relatively stiff, paper-based or plastic material, such as, for example, tag board, having a thickness of .010 inches and being generally rectangular in shape. The sheet has a plurality (nine in the embodiments shown) of apertures 18 formed therein as by dye cutting of the included tabs 19 (two shown) to provide windows for

- 8 -                    0042125

the individual frames of tne film strips.  In the
initial fabrication and cutting, the individual tabs
19 are left in their corresponding apertures 18 until
such time as it becomes desirable to place a film
strip therein for viewing.  At that time, the tab or
tabs are then removed as will be more fully discussed
hereinafter.  In the embodiment shown, tabs have been
removed and film strips placed in the resulting
apertures, in seven of the nine possible positions,
and in the two remaining positions, tne tabs 19 have
been retained in their original position.

It should be mentioned that the particular window
size and shape can be varied in order to accommodate
the film strip frame size and viewing effect.  For
example, it may be desirable to have the windows of
the same rectangular dimensions as those of the film
frames 16, or, alternatively, it may be desirable to
have the windows round in shape or generally square
in shape with rounded corners as shown.  It is
desirable for identification purposes to provide an
additional cutout 21 at the lower end of the bottom
frame as shown to expose the patient identification
number which is affixed to the film in that
corresponding position.  In this way, each film strip
is so identified and recognizable in the mount.
Whatever the configuration, it is desirable to have
sufficient sheet structure left after the apertures
18 are formed in order to provide a relatively stiff
and durable framework on which to lastingly retain
and support the film strips 14.  On the rear side of

- 9 -

0042125

the face sheet 11, including its tabs 19, is a coating 20 of a particular type of adhesive having certain characteristics which facilitate the present invention. The particular adhesive chosen should be one which has a sufficient and lasting tack which will prevent the inadvertent separation of the facing and backing sheets in the mount frame 13, and at the same time permit a peeling apart of the two elements at the tab portions thereof. Further, the adhesive should be of a type which facilitates, after the removal of a backing sheet tab, a subsequent application of a film strip thereto which will last over prolonged periods of time and under conditions of relatively rough treatment. The nature of this bond should also allow the subsequent, selective peeling away of the film strip and the reapplication of that film strip or another film strip without causing any damage to the adhesive, the face sheet 11, or the film strip 14. Thus, the adhesive should not adhere to the polyester radiographic film when the film is peeled away from the backing sheet, as will be described hereinafter. Further, the adhesive should not degrade the radiographic film or lose its tackiness by the repeated application and peeling away of film strips. One adhesive which has been found to be suitable in meeting these needs is an acrylic-based repositionable adhesive which is commercially available under the trade name Chemtrol R-307.

Another adhesive which could be used is one which is commercially available under the trade name Mactac MR327. It will be understood that still other adhesives may be used in obtaining the advantages of the present invention.

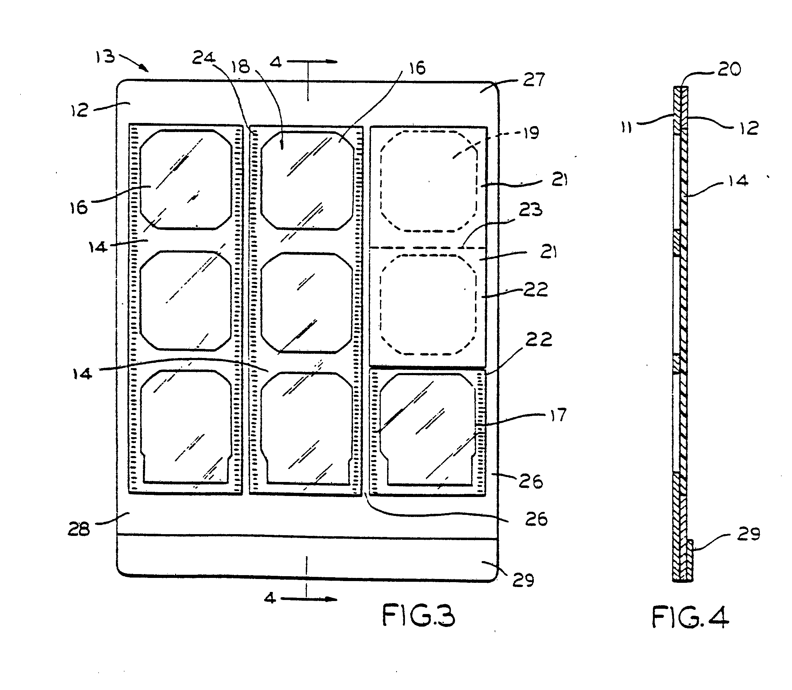

Referring now to the backing sheet 12 as illustrated in Figures 3 and 4, it is fabricated of a relatively light and flexible paper-based material which conforms to the size and shape of the face sheet and which is applied to the adhesive 20 on the back of the face sheet 11, such that the backing sheet 12 and the face sheet 11 form the composite frame 13. A material which is suitable for use as this backing sheet is one which is commercially available and which can be described as 50 pound, clay-coated on one side, kraft silicone-release liner. Generally, this material can be described as being relatively granular and porous on its one side as seen in Figure 3 and relatively non-porous and "slick" on the side which attaches to the adhesive. There are a plurality (nine in the embodiment shown) of tabs 21 which are cut, as by dye cutting, in the backing sheet 12. These tabs 21 are individually removable by peeling them from the adhesive-laden rear surface of the face sheet to provide corresponding apertures 22 for receiving film strips 14 therein. In the particular embodiment shown, three tabs have been peeled away from each of two columns and a single tab has been removed from the third column with the other two tabs 21 remaining.

The two film strips 14 containing three frames each were placed in the apertures formed in the first two columns, and a film strip containing a single frame 17 was placed in the aperture in the third column. It will be seen that in each of the columns, the three tabs span the entire length thereof. That is, where one tab leaves off, the other begins such that there is a common border 23 therebetween. Thus, when a plurality of adjacent tabs are removed, there is no backing sheet structure left between the apertures so that an entire film strip 14 comprising a plurality of frames may be inserted in the resulting apertures without separation of the individual frames. Hence, in the first two columns, each of the film strips 14 comprises three undivided frames 16 which can be collectively placed in their installed position.

It will be recognized that the backing sheet tabs 21 are larger than the face sheet tabs 19 so that, when a backing sheet tab 21 and its corresponding face sheet tab 19 is removed to present the resulting aperture, there is left around the periphery of each of the face sheet apertures 18 an exposed portion 24 on the rear side of the backing sheet. This exposed portion 24 still has, after removal of the backing sheet tab, the coating of adhesive which adhesively engages the one side of the film strip 14 when it is placed in the installed position as shown. The bond which is thus formed should be sufficient to retain the film in that position for prolonged periods of time during relatively rough handling, while at the

- 12 -    0042125

same time allow peeling away of the film and a replacement thereof without incurring damage to either the film mount, the adhesive coating, or the film structure.

As mentioned, the backing sheet material which corresponds to the positions between the individual film frames is removed with the tabs. However, the tab matrix does not extend laterally across the backing sheet, but rather excludes the longitudinal strips 26 which are between and outward from the longitudinal edges of the film strips 14. These strips 26, along with the portions of the backing sheet at the upper and lower ends of the frame, 27 and 28, respectively, remain in their positions bonded to the facing sheets for the life of the frame. In addition to providing some rigidity to the structure, these elements provide a framework which defines the aperture borders and which facilitates the guidance and easy installation of the film strips into their proper positions. Thus, the width of the backing sheet tabs 21 is only slightly greater than the width of the film strips to be used, such that, when the film strip is placed in the aperture 22 formed by removal of the backing sheet tab 21, the individual frames of the film are laterally placed in their proper positions. Similarly, the backing sheet material 27 and 28 at the top and bottom of the frame, respectively, as well as the top or bottom of any remaining tabs, acts to provide a guide for longitudinally positioning the film strips in their proper positions.

In order to facilitate a lasting bond between the installed film strips 14 and the rear side of the face sheet, it is desirable to have a relatively smooth interface surface between the backing sheet strips 26 and the film strips 14, so as not to allow the film strips to be easily snagged and peeled off. It is thus desirable that the thickness of the backing sheet strips 26 is substantially equal to or slightly less than the thickness of the film strips 14. Preferably, the thickness should be such that, when the film is installed, its edges are substantially flush with the backing sheet strips 26 to prevent snagging, and yet the strips are not so high as to prevent the film from being placed face down on a surface for contact printing. Duplicate films can thus be made without removal of the film from the mount.

A further precaution to be carried out in bringing about the favorable flush condition to prevent snagging is to ensure that the film strips are of the proper length such that they do not overlap onto the upper and lower ends 27 and 28 of the backing sheet but rather fit down into the backing sheet apertures 22, so as not to leave any exposed edges for snagging.

As mentioned hereinabove, the face sheet tabs 19 and backing sheet tabs 21 are preferably cut out by a die-cutting process. In each case, the cutting process is accomplished after the face sheet 11 and backing sheet 12 are adhesively joined. However, the

- 14 -    0042125

cutting out of the face sheet tabs 19 may be performed before the backing sheet is attached. If it is cut before, it is desirable to leave an uncut portion, such as by perforating or skipping a plurality of small uncut portions, to provide a means for retaining the tab in its aperture. If the backing sheet is attached prior to the cutting out of the face sheet tabs 19, the entire tab may be cut out, since the backing sheet will act to retain it in its aperture. In this case, a peeling away of the backing sheet will automatically take with it the attached tab(s) 19, a feature which facilitates a quick and easy procedure of mounting films. It may be still desirable, however, to leave some uncut portions around the tabs 19 to provide additional retention stability to the tabs.

When die cutting the backing sheet 12, it is desirable to cut not only through the backing sheet itself but also through the adhesive which has been applied to the face sheet 11. This will ensure a clean cut and will allow the removal of the tab without leaving fuzz or ragged edges. Again, the backing sheet tabs 21 may be entirely cut out, or they may be separated along portions thereof. Alternatively, there may be a few small, uncut portions left to aid in the retention of the tabs in their position. A preferred form is to have the tabs' outer edges completely cut out and to have the interconnection, between adjacent tabs, being serrated.

In order to provide increased stiffness at one end of the frame for ease in handling, an additional piece of face sheet material 29 may be attached with an adhesive on the one side of the backing sheet 12 to provide a sandwich structure as shown. An alternative would be to wrap an overhang portion of the face sheet around to provide the desired double-thickness overlap.

It will be seen that where the backing sheet strips 26 and the upper 27 and lower 28 backing sheet portions remain, there is a double thickness in the mount structure, whereas in the areas designated by the numeral 24, there is only a single, face sheet layer. Because it is desirable that the face sheet is not too thick, this single layer is likely to allow for the passing through of light from the illuminator to the eyes of the viewer, a condition which is undesirable. A method of overcoming this problem is to specifically treat the face sheet to render it substantially opaque. This is accomplished by applying a dark-colored dye to the top surface of the face sheet 11. A preferred dye to be used is one commercially available as Flexagleem, Dense Black - Alcohol Die Base Ink. After this opacity is obtained, other colors and surface conditioners can then be applied to the surface to obtain the desired appearance and handling characteristics.

While the present invention has been shown and described in terms of a specific embodiment, it will be understood that other modifications and improvements will be apparent to those skilled in the art. For example, the tab means without the peel-away feature might be desirable. Alternatively, the tabs may be eliminated and the backing sheet peel-away portion would only be a portion surrounding the apertures. It should therefore be understood that the present invention is not limited to the particular form shown and described but should include all modifications which do not depart from the spirit and scope of the invention.

- 1 -                    10077-15XZ-1962

## IN THE CLAIMS

1. An improved film-mounting frame of the type having face and backing sheets, each having aperture means formed therein for the cooperative reception of film strips to be illuminated for viewing, wherein the improvement characterized by:

tab means in each of said face and backing sheets, said face sheet tab means and said backing sheet tab means being cooperatively removable to provide at least one aperture over which a film strip can be placed for projected viewing.

2. An improved film-mounting frame as set forth in Claim 1 wherein the cooperative removal of said face sheet tab means and said backing sheet tab means exposes an adhesive for adhesively engaging the film strip.

3. An improved mounting frame as set forth in Claim 2 wherein said adhesive is of a type which allows removal of said film strip from engagement therewith and subsequent replacement thereof without the occurrence of any significant damage to said film strip.

4. An improved film-mounting frame as set forth in Claim 2 wherein said adhesive is disposed on the back side of said face sheet.

5.  An improved film-mounting frame as set forth in Claim 1 wherein said face sheet tab means and said backing sheet tab means are secured together by an adhesive means.

6.  An improved film-mounting frame as set forth in Claim 1 wherein said face sheet aperture means is smaller than said backing sheet aperture means, such that, when said face sheet tab means and said backing sheet tab means are cooperatively removed, the peripheral edge of said face sheet is left around the resulting aperture for the placement of the peripheral portion of a film strip thereon.

7.  An improved film-mounting frame as set forth in Claim 6 wherein said face sheet peripheral edge has an adhesive disposed thereon for bonding the film strip to said face sheet peripheral edge.

8.  An improved film-mounting frame as set forth in Claim 1 wherein said face sheet tab means comprises a plurality of spaced tabs which are selectively removable from a face sheet frame structure.

9.  An improved film-mounting frame as set forth in Claim 8 wherein said plurality of spaced tabs are at least partially defined by a perforated border.

10. An improved film-mounting frame as set forth in Claim 1 wherein said backing sheet tab means comprises a plurality of spaced tabs which are selectively removable from a backing sheet frame structure.

11. An improved film-mounting frame set forth in Claim 10 wherein said plurality of spaced tabs are at least partially defined by a perforated border.

12. An improved film-mounting frame as set forth in Claim 1 wherein said face sheet tab means is smaller than said backing sheet tab means.

13. An improved film-mounting frame as set forth in Claim 1 wherein an adhesive is disposed on the back side of said face sheet for adhesively engaging said backing sheet and for facilitating separation of portions of said backing sheet tabs therefrom and for subsequently applying a film strip in adhesive engagement therewith.

14. An improved film-mounting frame as set forth in Claim 13 wherein said adhesive is of a type which allows for the separation of a film strip therefrom and the subsequent reapplication thereto without the occurrence of any significant damage to said film strip.

15. An improved film-mounting frame as set forth in Claim 1 wherein the width of said backing sheet tab means is slightly larger than the width of the film strip to be placed over said at least one aperture.

16. An improved film-mounting frame as set forth in Claim 1 wherein the thickness of said backing sheet is substantially equal to the thickness of the film strip to be placed over said at least one aperture.

17. An improved film-mounting frame as set forth in Claim 1 wherein said face sheet includes a dark-colored dye to render it substantially opaque to light from the illuminator.

18. A film-mounting frame for receiving and retaining film strips for illumination and viewing characterized by:

A face sheet having an adhesive applied to the rear side thereof and having a plurality of tabs which can be selectively removed to provide respective apertures for accommodating the viewing of film strips to be placed therein, and a backing sheet attached by the adhesive to the rear side of said face sheet and having a plurality of tabs larger than but in corresponding overlying position with said face sheet tabs, said backing sheet tabs being selectively removable to expose a portion of the rear side of said face sheet for adhesively receiving and retaining the film strip.

19.  An improved film-mounting frame of the type having face and backing sheets and having aperture means for receiving a film strip to be illuminated for viewing, wherein the improvement characterized by:

An adhesive disposed between at least a portion of the face sheet and at least a portion of the backing sheet, said adhesive being of a type which allows for the peeling away of said backing sheet portion from said face sheet portion and the subsequent application and retention of a film strip to the adhesive.

20.  An improved film-mounting frame as set forth in Claim 19 wherein said adhesive is of a type which further allows the subsequent and deliberate peeling away of said film strip without incurring any substantial damage to said film strip, adhesive, or facing sheet.

21.  An improved film-mounting frame as set forth in Claim 19 wherein said portions are adjacent the aperture means.

22.  An improved film-mounting frame as set forth in Claim 19 wherein said backing sheet includes remaining portions which act to form a framework and guide for positioning the film strips on said adhesive.

23.  An improved film-mounting frame as set forth in Claim 22 wherein said remaining portions have a thickness which is substantially equal to that of the film strips.

24.  An improved film-mounting frame as set forth in Claim 22 wherein the thickness of said remaining portions is such as to allow the placing of the installed film down on a surface for contact printing without interference by said backing sheet remaining portions.

25.  An improved film-mounting frame as set forth in Claim 19 and including tab means disposed in and filling the aperture means, said tab means being integral and removed with said backing sheet portion when it is peeled away from said face sheet portion.

26.  An improved film-mounting frame as set forth in Claim 19 wherein said face sheet portion is treated with a dye to render it substantially opaque to light when illuminated for viewing of the film strips.

FIG.1

FIG.2

1/2

0042125

FIG.3

FIG.4

0042125

European Patent
Office

**EUROPEAN SEARCH REPORT**

0042125
Application number

EP 81 10 4384

## DOCUMENTS CONSIDERED TO BE RELEVANT

| Category | Citation of document with indication, where appropriate, of relevant passages | Relevant to claim |
|---|---|---|
| A | US - A - 2 896 351 (R.L. JOHNSON)<br>* Claims 2,3; figures 1-6 *<br><br>-- | 1,4,5,<br>8,13-<br>15,18,<br>19,22 |
| A | FR - A - 2 142 381 (N.V. PHILIPS)<br>* Page 3, figure 1 *<br><br>---- | 1,4,7-<br>9,18 |

**CLASSIFICATION OF THE APPLICATION (Int. Cl.³)**

G 03 B 21/64

**TECHNICAL FIELDS SEARCHED (Int. Cl.³)**

G 03 B 21/64
B 42 F 5/00
5/02
G 03 C 11/14
G 03 D 15/10

**CATEGORY OF CITED DOCUMENTS**

X: particularly relevant
A: technological background
O: non-written disclosure
P: intermediate document
T: theory or principle underlying
the invention
E: conflicting application
D: document cited in the
application
L: citation for other reasons

&: member of the same patent
family,
corresponding document

The present search report has been drawn up for all claims

| Place of search | Date of completion of the search | Examiner |
|---|---|---|
| The Hague | 09-09-1981 | BOEYKENS |